# EUROPEAN PATENT SPECIFICATION

(11) **EP 2 451 227 B1**
(45) Date of publication and mention of the grant of the patent: **08.05.2013**
(21) Application number: 11802257.3
(22) Date of filing: 01.09.2011
(51) Int. Cl.: H04W 56/00, H04W 52/02, H04W 8/26, G01D 4/00

(54) **WIRELESS COMMUNICATION APPARATUS, WIRELESS COMMUNICATION SYSTEM AND WIRELESS COMMUNICATION METHOD**
DRAHTLOSE KOMMUNIKATIONSVORRICHTUNG, DRAHTLOSES KOMMUNIKATIONSSYSTEM UND DRAHTLOSES KOMMUNIKATIONSVERFAHREN
APPAREIL DE COMMUNICATION SANS FIL, SYSTÈME DE COMMUNICATION SANS FIL ET PROCÉDÉ DE COMMUNICATION SANS FIL

(30) Priority: 09.09.2010 JP 2010201641
(43) Date of publication of application: 09.05.2012
(73) Proprietor: Panasonic Corporation, Kadoma-shi Osaka 571-8501 (JP)
(72) Inventor: SAITOU, Junichi, Osaka-shi, Osaka 540-6207 (JP); YAMAMOTO, Masahiro, Osaka-shi, Osaka 540-6207 (JP); HORIIKE, Yoshio, Osaka-shi, Osaka 540-6207 (JP); WATANABE, Takashi, Osaka-shi, Osaka 540-6207 (JP); KOBA, Yasuo, Osaka-shi, Osaka 540-6207 (JP)
(74) Representative: Schwabe - Sandmair - Marx
(86) International application number: PCT/JP2011/004902
(87) International publication number: WO 2012/032742

(56) References cited:
- WO-A1-2006/083150
- WO-A1-2008/020856
- WO-A1-2008/086213
- JP-A- 2007 214 842
- JP-A- 2008 011 314
- US-A1- 2005 201 310

## Description

### TECHNICAL FIELD

The present invention relates to a wireless communication system including a wireless communication device for transmitting a beacon signal and another wireless communication device for maintaining time synchronization by receiving the beacon signal, and a wireless communication device and a method of wireless communications used for such wireless communication system.

### BACKGROUND ART

In a wireless communication system having a slave wireless device powered by a battery, it is the common practice to operate the slave wireless device intermittently in a standby mode of reception in order to reduce power consumption of the slave wireless device. There are wireless communication systems of a certain type called synchronous system, in which a slave wireless device in the wireless communication system operates intermittently in the standby mode of reception.

In this system, a master wireless device transmits beacon signals at regular time intervals, and a slave wireless device receives the beacon signals at regular time intervals and sets a clock of the own station to a clock of the master wireless device. The slave wireless device also sets itself on a standby state for receiving a polling data from the master wireless device at predetermined timing. This method is effective to reduce power consumption of the slave wireless device (refer to patent literature 1 for example).

In the technique described in patent literature 1, the master wireless device arbitrarily generates a code that is different from a unique device address and shorter in length than the unique device address, and transmits it as a device identification code by superimposing it on the beacon signals. The beacon signals include the unique device address and the code generated arbitrarily by the master wireless device.

The code generated arbitrarily by the master wireless device is used as a device identification code during data communications between the master wireless device and the slave wireless device. This helps shorten a signal length of the data communications to carry out the communications efficiently.

In the method of patent literature 1, however, a length of each beacon signal tends to become long since both of the unique device address and the code generated arbitrarily by the master wireless device are superimposed on it. It therefore gives rise to a problem that power consumption increases for transmission and reception of the beacon signals.

In the case of a wireless communication system for automated meter reading designed to take reading data of a gas meter or the like, in particular, the frequency of data communications is as low as about once a month to once a day. On the other hand, there exists a demand for reduction of the energy consumption to such a low level that makes replacement of a battery unnecessary for ten years. It is thus required to shorten the signal length of the beacon signals since the power required for frequently repeated transmission and reception of the beacon signals influences largely upon a battery life of the wireless communication device used in this type of wireless communication system.

In addition, it is desirable for this type of wireless communication system that one master wireless device includes a large number of slave wireless devices in order to reduce the system cost. For this purpose, a suggestion has been made of a telecommunication system provided with a large number of relay wireless devices between the master wireless device and the slave wireless devices. The relay wireless device carries out relay transmission task by transmitting beacon signals to the slave wireless devices in place of the master wireless device.

In the wireless communication system having a single master wireless device, there arises a problem that it increases a number of bits of beacon identification code for uniquely identifying the beacon signal, and therefore increases a length of the beacon signal when there are a large number of relay wireless devices that transmit these beacon signals.

### Citation List

### Patent Literature

PTL 1: Japanese Patent Unexamined Publication, No. 2008-11314

### SUMMARY OF THE INVENTION

The present invention provides a wireless communication device and a method of wireless communications capable of uniquely identifying a beacon signal while avoiding an increase in power consumption by shortening a length of the beacon signal to be transmitted.

The wireless communication device carries out communications with at least a lower-level device. The communication device comprises a beacon signal generator for generating beacon signals used for synchronizing a clock of the lower-level device, and a beacon signal transmitter for transmitting the beacon signals generated by the beacon signal generator to the lower-level device at regular time intervals. The beacon signal generated by the beacon signal generator includes a beacon identification code, which is shorter in code length than a communication identification code of the device itself, and at least a part of the beacon identification code includes a code generated arbitrarily by the beacon signal generator.

A method of wireless communications is for making communications with at least a lower-level device. The method comprises a beacon signal generation step for generating beacon signals used to synchronize a clock of the lower-level device, and a beacon signal transmission step for transmitting the beacon signals generated in the beacon signal generation step to the lower-level device at regular time intervals. The beacon signal generated in the beacon signal generation step includes a beacon identification code, which is shorter in code length than a communication identification code of own device, and at least a part of the beacon identification code includes a code generated arbitrarily by a beacon signal generator.

### BRIEF DESCRIPTION OF DRAWINGS

Fig. 1A is a block diagram showing a structure of a master wireless device according to an exemplary embodiment of the present invention;
Fig. 1B is a block diagram showing a structure of a relay wireless device according to the exemplary embodiment of this invention;
Fig. 1C is a block diagram showing a structure of a slave wireless device according to the exemplary embodiment of this invention;
Fig. 2 is a schematic diagram showing a configuration of a wireless communication system according to the exemplary embodiment of this invention;
Fig. 3A is a schematic illustration showing a basic slot configuration controlled in the wireless communication system according to the exemplary embodiment of this invention;
Fig. 3B is a schematic illustration showing a structure of link connection slot (L) within the basic slot configuration controlled in the wireless communication system according to the exemplary embodiment of this invention;
Fig. 4 is a schematic illustration showing relationship of slot positions among the master wireless device, the relay wireless device, and the slave wireless device according to the exemplary embodiment of this invention;
Fig. 5A is a schematic illustration showing a text format of a link connection signal according to the exemplary embodiment of this invention;
Fig. 5B is a schematic illustration showing a configuration of repeating frames in the text format of the link connection signal according to the exemplary embodiment of this invention;
Fig. 6 is a schematic illustration showing a link connection signal transmitted from a higher-level device, and carrier-sensing timing of a lower-level device for executing reception carrier sensing of the link connection signal transmitted from the higher-level device according to the exemplary embodiment of this invention;
Fig. 7A is a schematic illustration showing a format of a data communication signal transmitted and received in a data communication slot according to the exemplary embodiment of this invention;
Fig. 7B is a schematic illustration showing a configuration of layer 3 frame of the data communication signal according to the exemplary embodiment of this invention;
Fig. 8A is a schematic illustration showing a configuration of route information according to the exemplary embodiment of this invention;
Fig. 8B is a schematic illustration showing a bit configuration of slot position information according to the exemplary embodiment of this invention;
Fig. 8C is a schematic illustration showing a bit configuration of relay wireless device information according to the exemplary embodiment of this invention;
Fig. 9A is a schematic illustration showing a signal configuration of beacon signal according to the exemplary embodiment of this invention; and
Fig. 9B is a schematic illustration showing a configuration of beacon ID according to the exemplary embodiment of this invention.

### DETAILED DESCRIPTION OF THE INVENTION

Description is provided hereinafter of an exemplary embodiment of the present invention with reference to the accompanying drawings. The embodiment described herein is illustrative and therefore not meant to limit the scope of the present invention.

### EXEMPLARY EMBODIMENT

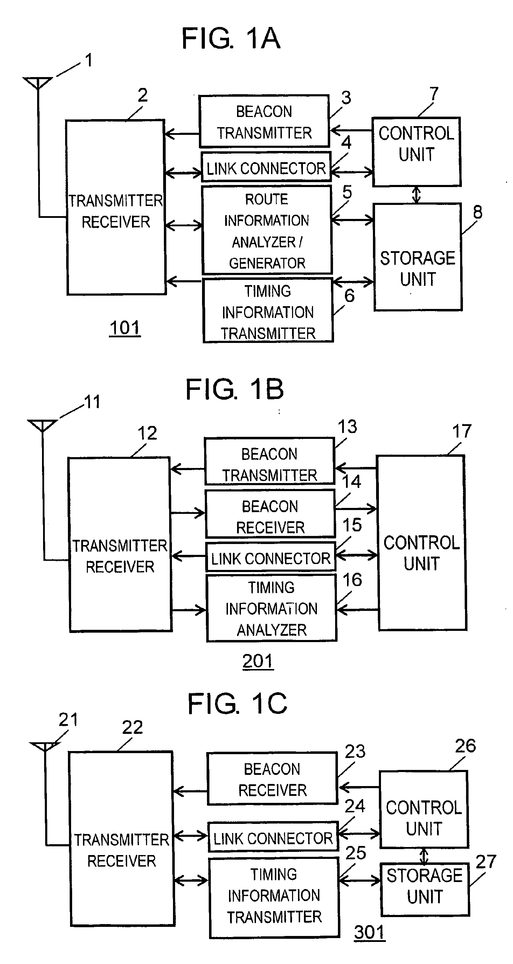

Fig. 1A is a block diagram showing a structure of master wireless device 101 according to an exemplary embodiment of the present invention, Fig. 1B is a block diagram showing a structure of relay wireless device 201 of the same embodiment, and Fig. 1C is a block diagram showing a structure of slave wireless device 301 of the same embodiment.

Description is provided first of a general structure of master wireless device 101.

As shown in Fig. 1A, master wireless device 101 comprises antenna 1, transmitter receiver 2, beacon transmitter 3, link connector 4, route information analyzer / generator 5, control unit 7, timing information transmitter 6 and storage unit 8.

Control unit 7 takes on the task of time management of the entire master wireless device 101 (wireless communication device) and controls individual components. Control unit 7 also functions as a beacon signal generator for generating beacon signals as will be described later.

Transmitter receiver 2 comprises a wireless transmitter-receiver circuit for making wireless communications via antenna 1.

Description is provided next of a general structure of relay wireless device 201.

Relay wireless device 201 comprises antenna 11, transmitter receiver 12, beacon transmitter 13, beacon receiver 14, link connector 15, timing information analyzer 16 and control unit 17, as shown in Fig. 1B.

Control unit 17 takes on the task of time management of the entire relay wireless device 201 (wireless communication device) and controls individual components. Control unit 17 also functions as a beacon signal generator for generating beacon signals as will be described later.

Transmitter receiver 12 comprises a wireless transmitter-receiver circuit for carrying out wireless communications via antenna 11.

Description is given next of a general structure of slave wireless device 301.

Slave wireless device 301 comprises antenna 21, transmitter receiver 22, beacon receiver 23, link connector 24, timing information transmitter 25, control unit 26, and storage unit 27, as shown in Fig. 1C.

Control unit 26 takes on the task of time management of the entire slave wireless device 301 and controls individual components.

Transmitter receiver 22 comprises a wireless transmitter-receiver circuit for carrying out wireless communications via antenna 21.

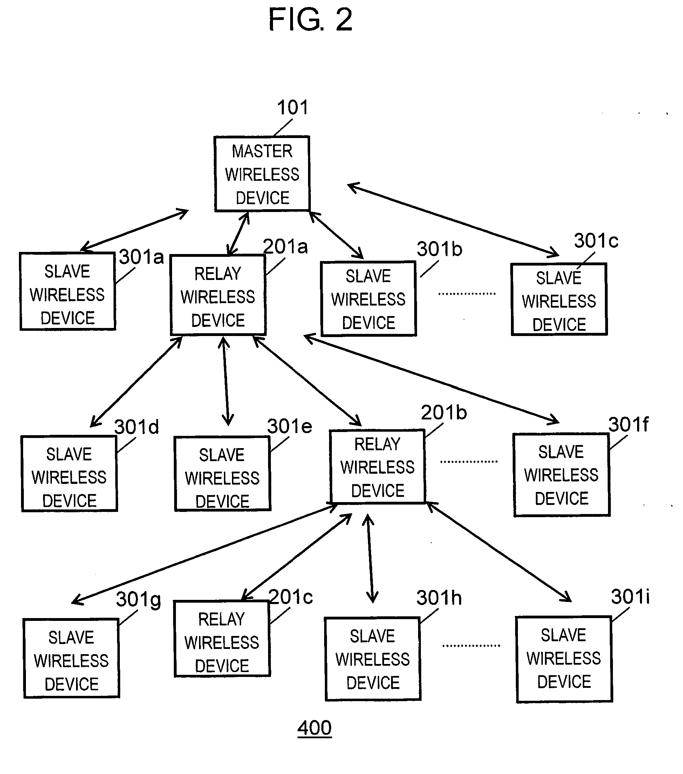

Fig. 2 is a schematic diagram showing a configuration of wireless communication system 400 according to the exemplary embodiment of this invention.

As shown in Fig. 2, wireless communication system 400 comprises master wireless device 101, relay wireless devices 201a to 201c (a group of these devices may be referred to as relay wireless devices 201), and slave wireless devices 301a to 301i (a group of these devices may also be referred to as slave wireless devices 301).

Description is provided now of brief operation of wireless communication system 400.

It is assumed here that master wireless device 101 cannot make communications directly with any of slave wireless devices 301d to 301i due to a poor radio-wave condition or for other reasons, whereas it can make direct communications with slave wireless devices 301a to 301c.

Thus, master wireless device 101 needs to make communications with slave wireless devices 301d to 301f via relay wireless device 201a. Master wireless device 101 also makes communications with slave wireless devices 301g to 301i via relay wireless device 201b in addition to relay wireless device 201a.

Master wireless device 101 transmits a signal called a beacon signal for setting clock at regular time intervals. Slave wireless devices 301a to 301c and relay wireless device 201a having direct communications with master wireless device 101 catch the transmitted beacon signal at regular intervals, and set their clocks in synchronization with that of master wireless device 101.

Here, master wireless device 101 is defined as a higher-level device, and slave wireless devices 301a to 301c and relay wireless device 201a that communicate directly with the higher-level master wireless device 101 are defined as lower-level devices.

Likewise, relay wireless device 201a functions as a master wireless device for slave wireless devices 301d to 301f and relay wireless device 201b, and that relay wireless device 201a transmits a beacon signal for clock setting at regular intervals. Slave wireless devices 301d to 301f and relay wireless device 201b communicating directly with relay wireless device 201a catch the transmitted beacon signal at regular intervals, and set their clocks in synchronization with that of relay wireless device 201a. In this case, relay wireless device 201a represents the higher-level device, and slave wireless devices 301d to 301f and relay wireless device 201b communicating directly with relay wireless device 201a represent the lower-level devices.

Furthermore, relay wireless device 201b functions as a master wireless device for slave wireless devices 301g to 301i and relay wireless device 201c, and relay wireless device 201b transmits a beacon signal for clock setting at regular intervals. Slave wireless devices 301g to 301i and relay wireless device 201c communicating directly with relay wireless device 201b catch the transmitted beacon signal at regular intervals, and set their clocks in synchronization with that of relay wireless device 201b. In this case, relay wireless device 201b represents the higher-level device, and slave wireless devices 301g to 301i and relay wireless device 201c communicating directly with relay wireless device 201b represent the lower-level devices.

Wireless communication system 400 carries out the communications by dividing the time base into a plurality of slots.

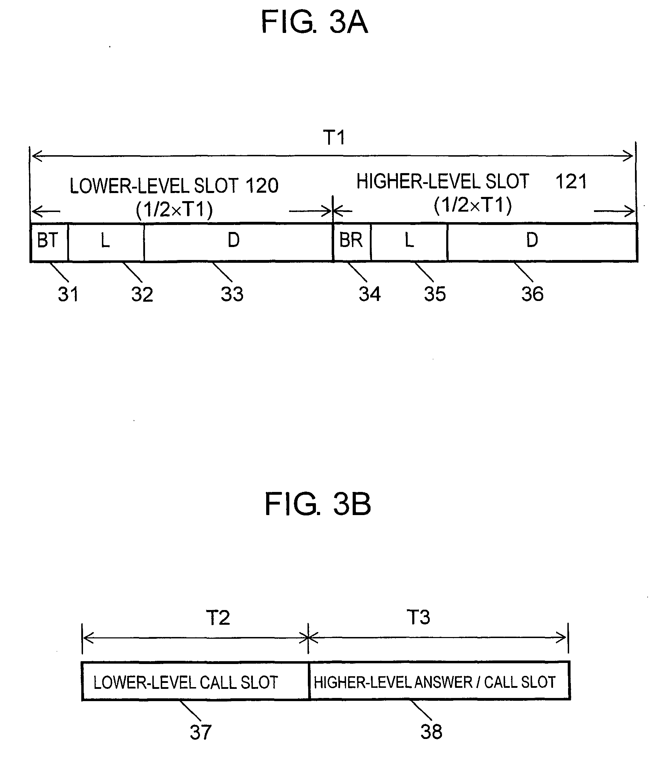

Fig. 3A is a schematic illustration showing a basic slot configuration controlled in wireless communication system 400 according to the exemplary embodiment of this invention.

This basic slot is configured of T1 second(s), and this basic slot is repeated on the time base. Here, the basic slot length T1 is 2 seconds, for instance. The basic slot further includes two slots, i.e., lower-level slot 120 and higher-level slot 121. Slot lengths of the lower-level slot and the higher-level slot are half the time of T1 (e.g., 1 second) respectively.

Lower-level slot 120 is assigned as a slot for communication with the lower-level devices, and higher-level slot 121 is a slot for communication with the higher-level device. Lower-level slot 120 is further divided into three slots. Lower-level slot 120 includes beacon transmission slot (BT) 31, link connection slot (L) 32 and data communication slot (D) 33.

Similarly, higher-level slot 121 is also divided into three slots. Higher-level slot 121 includes beacon reception slot (BR) 34, link connection slot (L) 35 and data communication slot (D) 36.

The higher-level device transmits the beacon signal to the lower-level devices at regular intervals by using beacon transmission slot (BT) 31. The higher-level device may be directed to transmit the beacon signal with every beacon transmission slot (BT) 31, or once every after a plural number of beacon transmission slots (BT) 31. When the beacon signal is transmitted with every second beacon transmission slot (BT) 31, a time interval between the beacon signal transmissions becomes 4 seconds when time is set as T1 = 2 seconds.

The lower-level devices receive the beacon signal regularly in beacon reception slot (BR) 34 from the higher-level device. A time interval of receiving the beacon signal can be set to an integral multiple of the transmission interval of the beacon signal. When the time interval it set to 256 times the beacon transmission interval of 2 seconds, for instance, the beacon reception interval comes to be 8 minutes and 32 seconds.

Link connection slots (L) 32 and 35 are assigned as the slots to make communications for link connection between the higher-level device and the lower-level device. Data communication slots (D) 33 and 36 are the slots to make communications for exchanging data between the higher-level device and the lower-level device after the link connection.

Fig. 3B is a schematic illustration showing a structure of any of link connection slots (L) 32 and 35 within the basic slot configuration controlled in wireless communication system 400 according to the exemplary embodiment of this invention.

As shown in Fig. 3B, each of link connection slots (L) 32 and 35 includes lower-level call slot 37 and higher-level answer / higher-level call slot 38 respectively. Lower-level call slot 37 is a slot assigned for the lower-level device to transmit a link connection request signal when link connection is being made from the lower-level device. Higher-level answer / higher-level call slot 38 is a slot assigned for the higher-level device to either return a response to the link connection request signal received from the lower-level device or transmit a link connection request signal when link connection is being made from the higher-level device to the lower-level device. T2 denotes a slot length of lower-level call slot 37, and T3 denotes a slot length of higher-level answer / higher-level call slot 38.

Description is provided here of beacon transmission from any of master wireless device 101 and relay wireless device 201. The beacon transmission with beacon transmission slot (BT) 31 is carried out by any of beacon transmitter 3 of master wireless device 101 and beacon transmitter 13 of relay wireless devices 201.

Described next is beacon reception by any of relay wireless device 201 and slave wireless device 301. The beacon reception with beacon reception slot (BR) 34 is carried out by any of beacon receiver 14 of relay wireless device 201 and beacon receiver 23 of slave wireless device 301.

Furthermore, the communication for link connection with link connection slot (L) 32 and 35 is carried out by any of link connector 4 of master wireless device 101, link connector 15 of relay wireless device 201 and link connector 24 of slave wireless device 301.

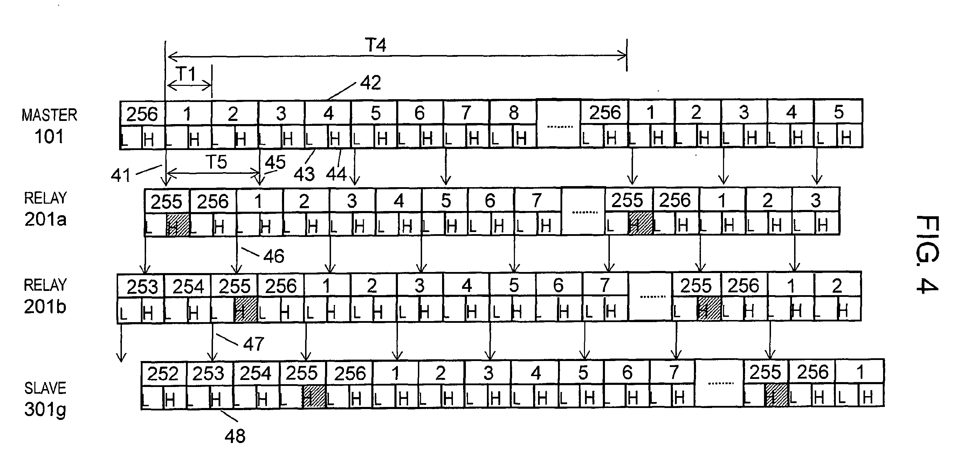

Fig. 4 is a schematic illustration showing relationship of slot positions among master wireless device 101, relay wireless devices 201a and 201b, and slave wireless device 301g according to the exemplary embodiment of this invention. Although what is being described here is an example of making communication between master wireless device 101 and slave wireless device 301g, communication between master wireless device 101 and any of other slave wireless devices 301 can be made in the like manner.

In Fig. 4, the uppermost line shows a slot under the control of master wireless device 101. The second line from the top shows a slot under the control of relay wireless device 201a. The third line from the top shows a slot under the control of relay wireless device 201b. The bottom line shows a slot under the control of slave wireless device 301g.

In Fig. 4, the character "L" marked in slot 43 represents lower-level slot 120 shown in Fig. 3A. Likewise, the character "H" marked in slot 44 represents higher-level slot 121 shows in Fig. 3A.

Basic slot 42 is a slot that includes slot 43 designated as lower-level slot 120 and slot 43 designated as higher-level slot 121. Basic slot 42 has slot numbers assigned sequentially from "1" to "256", and slot number "1" is assigned to another basic slot 42 next to slot number "256". Assignment of these slot numbers is repeated consecutively.

Beacon signal 41 is transmitted from beacon transmission slot (BT) 31 in every other lower-level slot 120 of basic slot 42 in Fig. 4. The beacon transmission interval T5 thus becomes T5 = 2×T1. The interval therefore comes to be T5 = 4 seconds when T1 = 2 seconds.

The beacon signal transmitted from master wireless device 101 is received by relay wireless device 201a at regular intervals. Relay wireless device 201a receives beacon signal 41 transmitted from slot number "1" of master wireless device 101. Beacon signal 41 carries beacon number "1" corresponding to slot number "1".

When relay wireless device 201a receives beacon signal 41 of beacon number "1", it reconfigures a slot in a manner that the starting position of lower-level slot 120 of slot number "1" of master wireless device 101 is in alignment with the starting position of higher-level slot 121 of slot number "255" of relay wireless device 201a (i.e., time synchronization and clock setting).

Relay wireless device 201a also transmits beacon signal 46 at a slot of odd number in the like manner as master wireless device 101.

The lower-level device receives the beacon signal transmitted from slot number "1" of the higher-level device, and reconfigures its own slot in synchronization with timing of the higher-level device in the same manner as above. The interval T4 for the lower-level device to receive the beacon signal of the higher-level device is T4 = 8 minutes and 32 seconds because the beacon signal repeats every after 256 basic slots.

The beacon reception is carried out in beacon reception slot (BR) 34 within higher-level slot 121, which is shown as hatched in Fig. 4. However, slave wireless device 301g does not transmit any beacon signal since there is no lower-level device connected with slave wireless device 301g.

Description is given in further detail. Relay wireless device 201a receives beacon signal 41 of beacon number "1" transmitted from master wireless device 101 in slot number "255" of relay wireless device 201a. Relay wireless device 201a transmits beacon signal 46 of beacon number "1" from lower-level slot 120 of slot number "1" of relay wireless device 201a.

Transmission of beacon signal 45 from slot number "3" of master wireless device 101 is so made that it is at timing of the higher-level slot having slot number "1" of relay wireless device 201a. In other words, relay wireless device 201a transmits beacon signal 46 in beacon transmission slot (BT) 31 of lower-level slot 120 having slot number "1" of relay wireless device 201a that is immediately before master wireless device 101 transmits beacon signal 45.

In the like manner, relay wireless device 201b transmits beacon signal 47 in beacon transmission slot (BT) 31 of lower-level slot 120 having slot number "255" of relay wireless device 201b that is immediately before relay wireless device 201a transmits beacon signal 46.

As described above, low-order relay wireless device 201a transmits beacon signal 46 at the slot position immediately before master wireless device 101 transmits beacon signal 45. Another low-order relay wireless device 201b also transmits beacon signal 47 at the slot position immediately before higher-level relay wireless device 201a transmits beacon signal 46.

Described here is a case, in which a data is transmitted from master wireless device 101 to slave wireless device 301g. Both relay wireless devices 201a and 201b carry out reception carrier sensing operation in higher-level answer / higher-level call slot 38 within every higher-level slot 121.

The reception carrier sensing operation is a task of detecting a reception level to determine whether it is above a predetermined level, and stopping the reception carrier sensing operation and resuming the standby state if the reception level is lower than the predetermined level. When the reception level is higher than the predetermined level, on the other hand, receiving operation of a link connection signal from the higher-level device is carried out. Accordingly, master wireless device 101 transmits a link connection signal in higher-level answer / higher-level call slot 38 within higher-level slot 121 of slot number "6" when the request for data transmission to slave wireless device 301g occurs, for instance, during the period of slot number "5".

While relay wireless device 201a is in the process of reception carrier sensing in higher-level answer / higher-level call slot 38 within higher-level slot 121 of slot number "4", it receives the link connection signal after the signal from master wireless device 101 is carrier sensed.

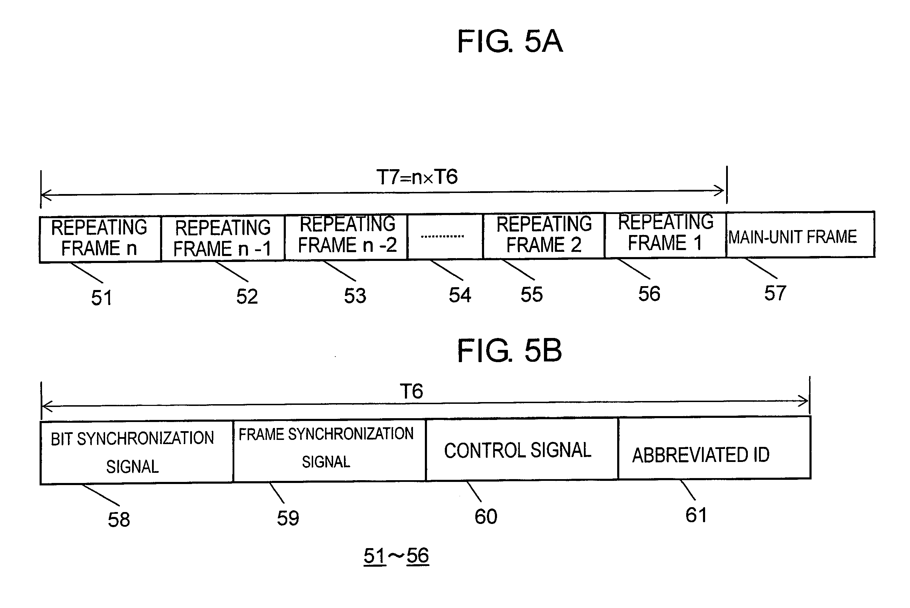

Fig. 5A is a schematic illustration showing a text format of the link connection signal according to the exemplary embodiment of this invention, and Fig. 5B is a schematic illustration showing a configuration of repeating frames 51 to 56 of the same.

The link connection signal comprises n sets of repeating frames from 51 to 56, and main unit frame 57. Each of repeating frames 51 to 56 comprises bit synchronization signal 58 for setting a bit sampling position, frame synchronization signal 59 for detecting a starting end of the data included in the frame, control signal 60 carrying various control data, and abbreviated ID 61 representing an abbreviated identification code for identifying a device (the identification code will be referred to hereinafter as ID).

Here, the ID is information expressed with 64 bits, for instance, and abbreviated ID 61 is 16-bit information given by dividing the ID into four parts. Control signal 60 carries information as to which one of the four divided 16-bit parts is used for abbreviated ID 61.

The link connection signal has repeating frame length T6. This means that repeating frame length T7 of the n sets of repeating frame comes to be T7 = n×T6. Repeating frames 51 to 56 are assigned individually with repeating frame numbers "1" to "n", and control signals 60 carry their respective repeating frame numbers.

Repeating frames 51 to 56 are transmitted sequentially from one having the largest repeating frame number to another in decrementing order of the repeating frame numbers, so that the number of repeating frame 56 becomes "1" immediately before the main unit frame, as shown in Fig. 5A.

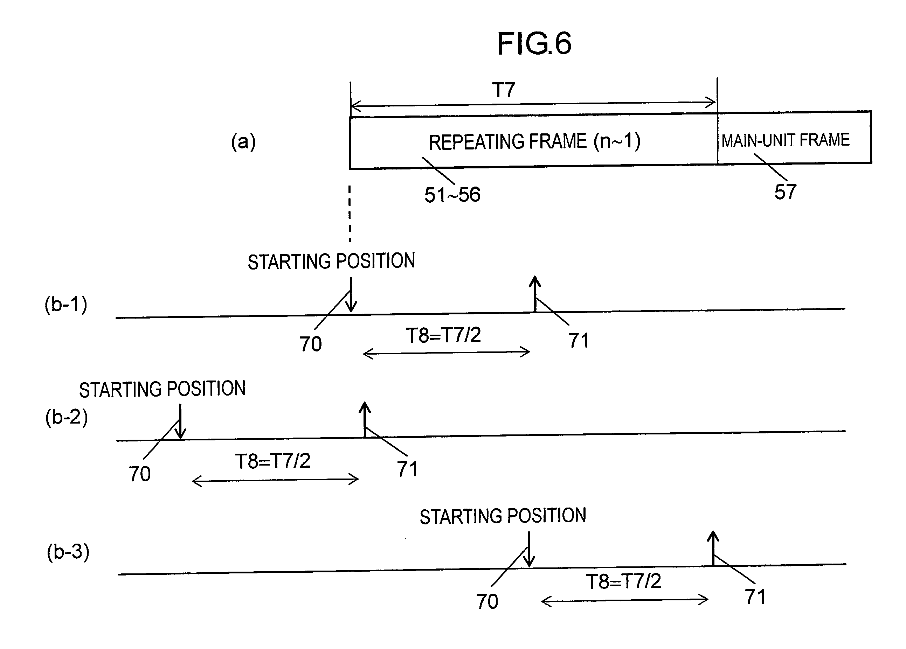

Fig. 6 is a schematic illustration showing a link connection signal transmitted from a higher-level device, and carrier sensing timing of a lower-level device for executing reception carrier sensing of the link connection signal transmitted from the higher-level device, according to this exemplary embodiment of the invention.

In Fig. 6, the first line (a) shows timing of the link connection signal, the second line (b-1) shows a case that there is no time lag of the clocks between the higher-level device and the lower-level device, the third line (b-2) shows another case that the clock of the lower-level device is advanced ahead of the higher-level device, and the bottom line (b-3) shows still another case that the clock of the lower-level device is delayed from the higher-level device.

In Fig. 6, starting position 70 of higher-level answer / higher-level call slot 38 is shown. Also shown is reception carrier sensing timing 71 of the lower-level device. The reception carrier sensing timing is set at time T8 = T7/2 from starting position 70 of higher-level answer / higher-level call slot 38. The timing set in this manner enables the lower-level device to receive the main unit frame by making the reception carrier sensing somewhere between repeating frames "1" through "n" of the link connection signal, as shown in Fig. 6, when time lag ΔT of the clocks between the higher-level device and the lower-level device is in a range of -T8≤ΔT≤T8.

Assuming that a maximum relative deviation of the clocks is ±100ppm between the higher-level device and the lower-level device, there occurs a maximum time lag of ±51.2ms between these clocks when the lower-level device sets the clock at intervals of T4 = 512 seconds as shown in Fig. 4. Therefore, the reception can be made without a failure if the number "n" of repeating frame transmissions of the link connection signal is set to be T8≥51.2ms.

However, if a request of data transmission from master wireless device 101 to slave wireless device 301g occurs during a time period of slot number "5" in Fig. 4, for instance, a link connection signal is transmitted in higher-level answer / higher-level call slot 38 within lower-level slot 120 of slot number "6". As relay wireless device 201a is carrying out reception carrier sensing in higher-level answer / higher-level call slot 38 within higher-level slot 121 of slot number "4", it receives the link connection signal from master wireless device 101 after the signal from master wireless device 101 is carrier sensed.

It is hardly likely that a lag occurs in the clock of relay wireless device 201a, or the lower-level device, at the position of slot number "4" since it adjusts the clock at the timing of beacon signal 41. Therefore, it is quite useless to transmit the repeating frame of the link connection signal so many number of times as what is given in consideration of the time lag of 51.2ms, which gives rise to a possible increase in the power consumption.

The number of times of transmitting the repeating frame in the link connection signal is thus made variable according to a time interval measured from a point in time when the clock setting is made with beacon signal 41 to a point of the timing for carrying out the reception carrier sensing. For example, the number of times to transmit the repeating frame in the link connection signal is made variable according to a slot number since the time interval measured from the point when the clock setting is made with beacon signal 41 to the timing for carrying out the reception carrier sensing is correlated with the slot number.

When master wireless device 101 transmits the link connection signal in slot number "x", master wireless device 101 sets the number of times of transmitting the repeating frame to be T7≥x/256×(±51.2ms). The number of times to repeat the transmission can be thus set to one or more when length T6 of the repeating frame is longer than 0.8ms, for instance, since T7 comes to be T7≥±0.8ms when it transmits the link connection signal in a position of slot number "4".

When the number of times of transmitting repeating frames 51 to 56 is made variable, time T7 in Fig. 6 also becomes variable. Therefore, in a case where time T8, or the timing to carry out the reception carrier sensing is fixed, reception carrier sensing timing 71 does not remain in the center of T7 if clock time lag ΔT=0 between master wireless device 101 and relay wireless device 201a.

This means that a difference exists in permissible ranges between the cases where clock time lag ΔT are positive and negative, and this is not considered desirable. It is for this reason to make timing T8 for carrying out the reception carrier sensing variable in synchronization with T7 by setting T8=T7/2 so that reception carrier sensing timing 71 remains in the center of T7 when clock time lag ΔT=0.

Here, T7 can be known from the slot number. In other words, it is know that T7 of the link connection signal becomes T7≥/x256×±51.2ms when a position of the slot number in which to carry out the reception carrier sensing is assumed to be "x" after converted into a slot number of master wireless device 101.

The example discussed above is the case of making T8 variable based on the slot number. Instead of the above, it is possible to have T8 of a fixed value, and make a starting position variable for transmitting the link connection signal shown in Fig. 6, as an alternative method. The link connection signal from the higher-level device is transmitted in higher-level answer / higher-level call slot 38 within link connection slot (L) 32 shown in Fig. 3A. Here, the timing of starting transmission of the link connection signal is made variable based on the slot number.

The timing of starting transmission of the link connection signal is advanced to bring the center of T7 into a position of the reception carrier sensing timing since T7 becomes larger as the slot number increases.

Following the request of data communication occurred in slot number "5" of master wireless device 101 as discussed above, master wireless device 101 executes link connection and data communication with relay wireless device 201a in slot number "6", and transmits data to relay wireless device 201a.

Relay wireless device 201a receives the data in slot "4" of relay wireless device 201a from master wireless device 101 and transmits it in slot "5" to relay wireless device 201b in a manner similar to the above. Relay wireless device 201b receives the data from relay wireless device 201a in slot "3".

Slave wireless device 301g is carrying out reception carrier sensing every four slots in order to reduce power consumption. Slot numbers in which slave wireless device 301g carries out the reception carrier sensing can be found from route information contained in the signal transmitted by master wireless device 101 and relayed to slave wireless device 301g through relay wireless device 201a and relay wireless device 201b. Details of the route information will be described later.

It is assumed here that the slot numbers in which slave wireless device 301g carries out the reception carrier sensing are found to be "1", "5", "9" and so on, as a result of analyzing the route information. Relay wireless device 201b thus transmits a link connection signal and data in a lower-level slot of slot number "7" of relay wireless device 201b corresponding to slot number "5" of slave wireless device 301g for which slave wireless device 301g is waiting in the reception carrier sensing operation. Relay wireless device 201b performs similar operation for making link connection with slave wireless device 301g as discussed with reference to Fig. 6.

Description is provided next of a case where data is transmitted from the slave wireless device 301g to master wireless device 101. When a demand occurs for a lower-level device to initiate transmission to a higher-level device, the lower-level device receives a beacon signal transmitted from the higher-level device, and transmits a link connection signal shown in Fig. 5A in lower-level call slot 37 within link connection slot (L) 35 immediately behind beacon reception slot (BR) 34 where the beacon signal is received.

Description is given more specifically. Slave wireless device 301g carries out receiving operation of the beacon signal of relay wireless device 201b. Since the beacon signal from relay wireless device 201b is transmitted every two slots, that is every 4 seconds, slave wireless device 301g can receive the beacon signal of relay wireless device 201b within 4 seconds after the occurrence of the demand for data transmission.

When the demand for data transmission occurs at a point in slot number "252" of slave wireless device 301g in Fig. 4, for instance, slave wireless device 301g receives beacon signal 47 in beacon number "255" of relay wireless device 201b within slot number "253" of slave wireless device 301g. Slave wireless device 301g then sets the clock according to beacon signal 47 of beacon number "255" received from relay wireless device 201b.

Following the above, slave wireless device 301g corrects the position of link connection slot (L) 35 shown in Fig. 3A in higher-level slot 48 of slot number "253", and makes link connection by transmitting a link connection signal to relay wireless device 201b.

Relay wireless device 201b executes the link connection with slave wireless device 301g in lower-level slot 120 having slot number "255" of relay wireless device 201b. The operation of transmission and reception of the link connection signal from slave wireless device 301g to relay wireless device 201b is carried out in the same manner as described in Fig. 6. Although a configuration of the link connection signal is identical to the signal shown in Fig. 6, the number of times for transmitting the repeating frame may be reduced since there is hardly any time lag in the clock.

After completing the link connection, slave wireless device 301g transmits a signal addressed to master wireless device 101 in data communication slot (D) 36 within the same higher-level slot 48 as used for the link connection. Relay wireless device 201b receives the signal addressed to master wireless device 101 in data communication slot (D) 33 within lower-level slot 120 corresponding to master wireless device 101.

Next, relay wireless device 201b receives beacon signal 46 transmitted from relay wireless device 201a within slot number "255" of relay wireless device 201b, and sets the clock according to received beacon signal 46. Relay wireless device 201b corrects the position of link connection slot (L) 35 in higher-level slot 121 of slot number "255", and makes link connection by transmitting a link connection signal to relay wireless device 201a.

Relay wireless device 201a executes the link connection with relay wireless device 201b in a lower-level slot having slot number "1". After completing the link connection, relay wireless device 201b transmits a signal addressed to master wireless device 101 in data communication slot (D) 36 within the same higher-level slot 121 as used for the link connection. Relay wireless device 201a then receives the signal addressed to master wireless device 101 in data communication slot (D) 33 within lower-level slot 120 corresponding to relay wireless device 201b.

In a similar manner, relay wireless device 201a receives beacon signal 45 transmitted from master wireless device 101 within slot number "1" of relay wireless device 201a, and sets the clock according to received beacon signal 45. Relay wireless device 201a corrects the position of link connection slot (L) 35 in higher-level slot 121 of slot number "1", and makes link connection by transmitting a link connection signal to master wireless device 101.

Master wireless device 101 executes the link connection with relay wireless device 201a in lower-level slot 120 having slot number "3" of master wireless device 101. After completing the link connection, relay wireless device 201a transmits a signal to master wireless device 101 in data communication slot (D) 36 within the same higher-level slot 121 as used for the link connection.

Master wireless device 101 then receives the signal addressed to master wireless device 101 in data communication slot (D) 33 within lower-level slot 120 corresponding to relay wireless device 201a.

As discussed above, the beacon signal from the higher-level device is transmitted in the slot immediately following transmission of the beacon signal from the lower-level device. This can hence achieve the relay transmission efficiently without causing a significant delay when transmitting to master wireless device 101 the signal originated from slave wireless device 301g and addressed to master wireless device 101.

In wireless communication system 400 discussed above, description is provided here about how the system operates when any of slave wireless devices 301 has its power turned on and gains access to wireless communication system 400. Slave wireless device 301 carries out receiving operation for a predetermined time and receives a beacon signal. When slave wireless device 301 has received a plurality of beacon signals within the predetermined time period, it determines as to which beacon signal to take for setting the clock of its own by using information obtained on reception levels of the received beacon signals and a number of relaying stages of relay wireless devices 201 from which the received beacon signals have been transmitted.

In the configuration of Fig. 2, slave wireless device 301g, for instance, receives the beacon signal of relay wireless device 201b and sets the clock. Slave wireless device 301g then transmits the link connection signal shown in Fig. 5A to relay wireless device 201b in lower-level call slot 37 within link connection slot (L) 35 following the beacon signal. A number of repeating frames is "5".

Slave wireless device 301g receives an answer signal for giving permission to the link connection, from relay wireless device 201b in higher-level answer / higher-level call slot 38. The operation up to this step establishes the link connection between relay wireless device 201b and slave wireless device 301g.

Next, slave wireless device 301g transmits in data communication slot (D) 36 an entry request signal to relay wireless device 201b, the link connection with which has been established, and requests it to relay the entry request signal bearing the ultimate addressee of master wireless device 101.

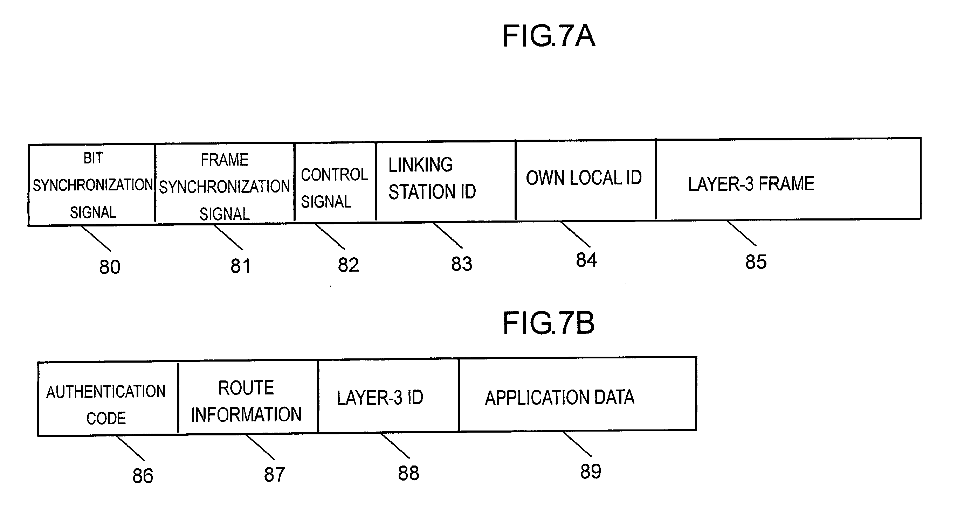

Fig. 7A is a schematic illustration showing a format of the data communication signal transmitted and received in the data communication slot (D) 36 according to this exemplary embodiment of the invention, and Fig. 7B is a schematic illustration showing a configuration of layer-3 frame 85.

Slave wireless device 301g transmits the data communication signal shown in Fig. 7A to relay wireless device 201b. The data communication signal includes bit synchronization signal 80, frame synchronization signal 81, control signal 82, linking station ID 83, own local ID 84 and layer-3 frame 85. Here, linking station ID 83 in the signal transmitted to relay wireless device 201b represents an ID of relay wireless device 201b, and the own local ID represents an ID of slave wireless device 301g.

Control signal 82 includes information on a signal length from linking station ID 83 to the end of layer-3 frame 85. Therefore, it can be known by analyzing received control signal 82 as to how long is the signal to continue that needs to be received.

As shown in Fig. 7B, layer-3 frame 85 is a frame signal that is to be relayed and transmitted to the ultimate addressee. In other words, layer-3 frame 85 originated from slave wireless device 301g shown in Fig. 2 is transmitted to master wireless device 101 by way of relay wireless device 201b and relay wireless device 201a.

Authentication code 86 is a code used to verify that layer-3 frame 85 is an authentic frame. Route information 87 covering information on a route from slave wireless device 301g to master wireless device 101 is completed by individual relay wireless devices 201, and transmitted to master wireless device 101. Layer-3 ID 88 carries an ID of slave wireless device 301g as the original transmitting station. Application data 89 represents data related to the application to be transmitted to master wireless device 101.

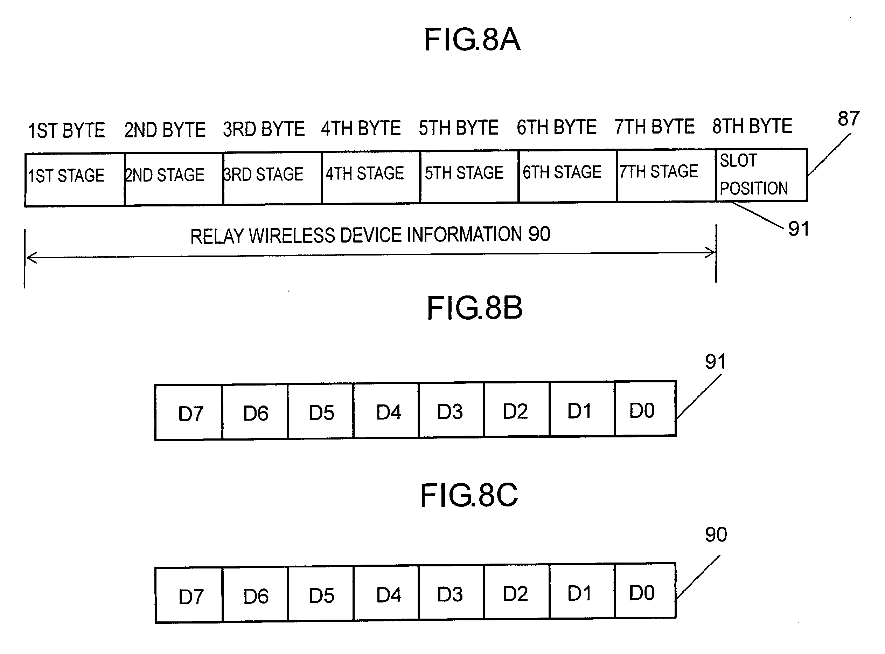

Fig. 8A is a schematic illustration showing a configuration of route information 87 according to this exemplary embodiment of the invention.

Route information 87 is configured of 8 byte data, and the first byte to the seventh byte carry information on relay wireless devices 201 situated in a relaying route from slave wireless device 301g to master wireless device 101 (i.e., relay wireless device information 90). Slave wireless device 301g transmits a data communication signal shown in Fig. 7A to relay wireless device 201b to which it belongs. Route information 87 includes table number and slot position information 91 held by relay wireless device 201 in each of the stages.

In addition, a slot position in the eighth byte of route information 87 carries slot position information 91 where slave wireless device 301g waits for reception of a signal from relay wireless device 201b, that is to carry out reception carrier sensing.

Fig. 8B is a schematic illustration showing a bit configuration of slot position information 91 according to this exemplary embodiment of the invention. Slot position information 91 is configured of 8 bits, as shown in Fig. 8B.

Description is provided of semantics of the individual bits in slot position information 91.

Bits D7 and D6 are fixed values of "0". Two bits D5 and D4 represent intermittent receiving period "m" of relay wireless devices 201 and slave wireless devices 301 in wireless communication system 400. In the case of relay wireless devices 201, the period "m" is generally m=1, which means that the waiting mode for reception is repeated at all slots. In the case of m=2, it indicates that the waiting mode for reception repeats every two slots.

Four bits D3 to D0 represent slot position number "y" where it waits for center polling, that is to wait for reception of a signal from relay wireless device 201, or the higher-level device. Slot position number "y" signifies the (y-1)th slot in order as counted from a reference slot number as defined below. Here, "y" can be a number in a range between "1" and intermittent receiving period "m".

The reference slot number is defined as "reference slot number = a×m+1", where "a" is an integer ranging from "0" to "255/m (i.e., number of slots / intermittent receiving period)". In other words, a reference slot exists in every m-th slot shown in Fig. 4 such as slot number 1, m+1, 2×m+1, and so on.

Accordingly, slot number "x" in the waiting mode for reception can be expressed as "reception-waiting slot number x = reference slot number + slot position number y-1". Slave wireless device 301 transmits two information consisting of intermittent receiving period "m" and slot position number "y" of slave wireless device 301 to master wireless device 101 by using slot position information 91. A route information table of slave wireless device 301 is then configured by master wireless device 101.

Although it is desirable to use a common value for intermittent receiving period "m" in wireless communication system 400, it may be different values from one slave wireless device 301 to another. Each of slave wireless devices 301 sets slot position number "y" of any value at random. Route information 87 configured in slave wireless device 301 is only slot position information 91, and "0x00" is inserted as relay wireless device information in each of the first byte to the seventh byte. Alternatively, "0xFF" can be inserted when relay wireless device 201 is the transmitting station.

Configuration and transmission of slot position information 91 of this kind defining the intermittent reception waiting timing in slave wireless device 301 are carried out by timing information transmitter 25. The information related to slot position information 91 is stored in storage unit 27.

The advantage of slave wireless device 301 to determine a slot position at the time of entry is that it sets an intermittent reception waiting slot by itself for receiving an entry enabling signal from master wireless device 101 after transmitting an entry request signal to master wireless device 101. This allows slave wireless device 301 to stay in a standby state until the intermittent reception waiting slot.

Description is provided here of a general outline of administering the route information by wireless communication system 400. Slave wireless device 301 administers only the slot position information of relay wireless device 201 to which it belongs. Relay wireless device 201 administers other relay wireless devices 201 that belong immediately under it as a table, and controls the table in a manner to correlate table numbers with relay wireless devices 201.

Master wireless device 101 administers slot position information of slave wireless devices 301 and table number information of relay wireless devices 201 that exist in the routes to slave wireless devices 301.

Fig. 8C is a schematic illustration showing a bit configuration of relay wireless device information 90 according to this exemplary embodiment of the invention.

Description is provided here of the bit configuration of relay wireless device information 90. Bit "D7" has different semantics when used in communications from a higher-level device to a lower-level device, as opposed to communications from the lower-level device to the higher-level device. In the case of communications from the higher-level device to the lower-level device, bit "D7" indicates the presence or absence of a deletion request of the table number, and master wireless device 101 executes this deletion request. When the communications are made from the lower-level device to the higher-level device, on the other hand, bit "D7" serves as an identifier for indicating whether any of the tables held by relay wireless devices 201 is filled completely.

Bit "D6" also has different semantics when used in communications from the higher-level device to the lower-level device, as opposed to communications from the lower-level device to the higher-level device. A value of bit "D6" is fixed to "0" in the case of communications from the higher-level device to the lower-level device. On the other hand, bit "D6" serves as an identifier to indicate that relay wireless device 201 is a new device registered in the table for the first time, as there has not been any relay wireless device 201 of immediate demesne listed in the table, when making communications from the lower-level device to the higher-level device.

Six bits from "D5" to "D0" indicate table numbers of individual relay wireless devices 201 under immediate control of another relay wireless device 201 present in the relay route. The table numbers that can be administered are up to 63. In this way, a total number of 63 relay wireless devices 201 from table number "1" to "63" can be administered excluding table number "0".

When relay wireless device 201 receives route information 87 from slave wireless device 301, it analyzes a byte data corresponding to a stage number of its own among those in received route information 87. For example, relay wireless device 201b located in the second stage analyzes the second byte. When a result of the analysis is "0x00", relay wireless device 201b interprets that it is a relay request originated from one of slave wireless devices 301g to 300i that belong to relay wireless device 201b. When the result is "0xFF", relay wireless device 201b interprets that the originator is relay wireless device 201c.

When the relay request is found to be from one of slave wireless devices 301g to 300i, relay wireless device 201b sets table number "0" in "D5" to "D0" of a byte of the applicable stage belonging to it, that is the second byte in this instance. In the example of Fig. 2, where the relay request comes from slave wireless device 301g, relay wireless device 201b sets table number "0" in "D5" to "D0" of the second byte.

If the result of the analysis is ""0xFF", relay wireless device 201b determines the relay request to be from relay wireless device 201c, and sets a table number corresponding to this relay wireless device 201c in "D5" to "D0" of the byte in the stage belonging to it.

If there is no information of relay wireless device 201c available in the table under the administration even though the relay request is from relay wireless device 201c, relay wireless device 201b registers relay wireless device 201c in the table and sets a registered table number in "D5" to "D0" of the byte in the stage belonging to it.

Route information 87 discussed above is transmitted from relay wireless device 201b to relay wireless device 201a. Relay wireless device 201a also carries out analysis and process of creating route information 87 in the same manner as relay wireless device 201b, and sets a table number corresponding to relay wireless device 201b in "D5" to "D0" of the first byte corresponding to the first stage belonging to relay wireless device 201a. Relay wireless device 201a then transmits created route information 87 to master wireless device 101.

In each of relay wireless devices 201a and 201b, timing information analyzer 16 takes the task of analyzing and creating route information 87 including slot position information 91 defining the intermittent reception waiting timing of the slave wireless devices.

Master wireless device 101 is able to identify the relay route to slave wireless device 301g by analyzing route information 87 transmitted from the lower-level device. That is, route information 87 has the table number corresponding to the ID of relay wireless device 201b under the control of relay wireless device 201a, which is input to the first byte. In addition, the table information in the second byte of route information 87 indicates that the original sender is one of slave wireless devices 301g to 301i since it is table number "0".

Also available are intermittent receiving period "m" and slot position number "y" of slave wireless device 301g as an original sender, that are input to the eighth byte of route information 87. An ID of the original sender, or slave wireless device 301g can be identified from layer-3 ID 88 shown in Fig. 7B.

In master wireless device 101, route information analyzer / generator 5 takes the task of analyzing and creating relay wireless device information 90. In each of slave wireless devices 301, timing information transmitter 25 takes the task of creating and transmitting slot position information 91 defining the intermittent reception waiting timing. All information related to route information 87 including slot position information 91 and relay wireless device information 90 are stored in storage unit 27.

As discussed, master wireless device 101 can identify route information of all slave wireless devices 301a to 301i that are embraced in wireless communication system 400 from route information 87 included in the signals that individual slave wireless devices 301a to 301i transmit to master wireless device 101 when they enter the system, and master wireless device 101 can hence create a table of the route information.

Described next as an example is a case where master wireless device 101 transmits a polling data to slave wireless device 301g. Master wireless device 101 creates route information 87 including a relay route to slave wireless device 301g as well as intermittent receiving period "m" and slot position number "y" of slave wireless device 301g by referring to the table of its possession containing the route information.

Master wireless device 101 transmits a link connection signal shown in Fig. 5A to the address of relay wireless device 201a using higher-level answer / higher-level call slot 38 within link connection slot (L) 32 of lower-level slot 120. Since relay wireless device 201a is in a standby state for intermittent reception in all higher-level answer / higher-level call slots 38, it can receive the link connection signal addressed to it from master wireless device 101.

Relay wireless device 201a receives the data communication signal shown in Fig. 7A transmitted in data communication slot (D) 36 from master wireless device 101, and verifies layer-3 ID 88 included in layer-3 frame 85. Relay wireless device 201a determines that the data communication signal is a relay request if it is not addressed to the own station, and analyzes the first byte of route information 87 (refer to the bit configuration of relay wireless device information 90 in Fig. 8C). If the table number written in bits "D5" to "D0" in the first byte is "0", it is an indication that the signal is addressed to one of slave wireless devices 301d to 301f that belongs directly under the own station.

Since the signal shown in this example is addressed to slave wireless device 301g, the table number written in bits "D5" to "D0" in the first byte is the ID of relay wireless device 201b. Relay wireless device 201a can then refer to the table of its possession and obtain an ID of relay wireless device 201b as to be the next relay station according to the table number written in bits "D5" to "D0" in the first byte.

Relay wireless device 201a establishes a link connection with relay wireless device 201b by taking a similar process as that used by master wireless device 101, and transmits a data communication signal to relay wireless device 201b. Relay wireless device 201b carries out similar analytical operation as that of relay wireless device 201a discussed above, and checks the table number written in bits "D5" to "D0" in the second byte of route information 87. Since the table number written in bits "D5" to "D0" in the second byte is "0", relay wireless device 201b identifies it as being addressed to one of slave wireless devices 301g to 301i that belongs directly under the own station.

Relay wireless device 201b can determine the ID of slave wireless device 301g directly belonging to it from layer-3 ID 88 included in the received data communication signal. The ID of slave wireless device 301g is written as the ultimate addressee in layer-3 ID 88.

Relay wireless device 201b can determine intermittent receiving period "m" and slot position number "y" of slave wireless device 301g by analyzing slot position information 91 in the eighth byte of route information 87. As discussed above, relay wireless device 201b uses intermittent receiving period "m" and slot position number "y" to calculate a slot where slave wireless device 301g waits intermittently for reception. Relay wireless device 201b establishes a link connection with slave wireless device 301g and relay-transmits the data communication signal by using the slot.

Layer-3 frame 85 is created by master wireless device 101, and it is relay-transmitted as is to slave wireless device 301g without being changed by relay wireless devices 201a and 201b. Slave wireless device 301g can also receive application data 89 from master wireless device 101.

As has been described, the reception waiting slot information of slave wireless device 301 is superimposed on the signal and transmitted from master wireless device 101 during communications. By virtue of this method, relay wireless device 201 needs not have information on the slave wireless devices that belong directly to it, but only the table for managing the relay wireless devices 201 immediately under it. It thus becomes unnecessary for relay wireless device 201 to limit a number of slave wireless devices 301 belonging to it. That is, the table in possession of the station can be reduced in size.

In addition, the table in master wireless device 101 can also be reduced for storage of route information to slave wireless devices 301. For example, master wireless device 101 needs to administer the ID of relay wireless device 201a directly under it, but not required to administer the ID of relay wireless device 201b that does not belong directly to it. Instead, master wireless device 101 needs to control only the table number of relay wireless device 201b under the administration of relay wireless device 201a. Assuming that each of relay wireless devices 201 has a maximum number of "63" relay wireless devices under its administration, the number of tables it is required to control becomes "63", and 6 bits of information shall suffice to cover the table numbers. It is therefore sufficient for each of relay wireless devices 201 to administer only 6 bits of information instead of administering 64 bits.

Moreover, it is also possible to reduce a number of bytes of the route information to be interposed on the data communication signal since the route information is just a table number corresponding to an ID of relay wireless device 201 in the relay route rather than the ID itself. If each of relay wireless devices 201 administers the maximum number of "63" relay wireless devices, for instance, it can set a relay route with 6 bits of information per single stage.

In general, the ID for designating a wireless communication device requires as large a number of bits as 64 bits. The route information thus becomes very large if the method adopted is to transmit ID's of relay wireless devices 201 in the relay route as the route information, which makes the communications inefficient. As discussed in this embodiment, on the other hand, the method of transmitting the table number as the route information can reduce the route information and realize efficient communications.

In this embodiment, although master wireless device 101 is assigned to store and administer the slot position information of slave wireless device 301g, it is also possible for relay wireless device 201b to take the task of administration. When this is the case, there is an advantage that slot position information 91 in the eighth byte of route information 87 becomes unnecessary though the table of relay wireless device 201b becomes heavier.

Description is provided next of a signal configuration of beacon signal according to this exemplary embodiment.

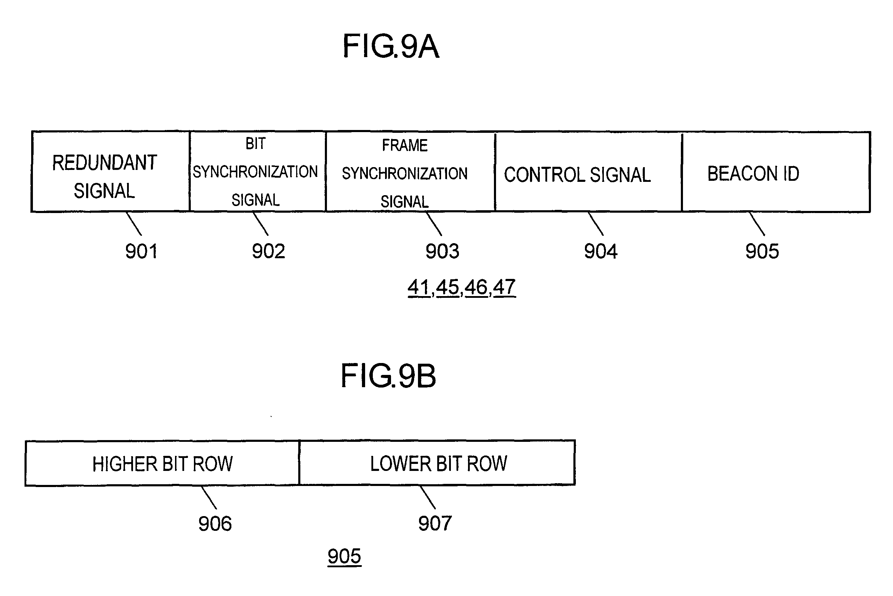

Fig. 9A is a schematic illustration showing the signal configuration of the beacon signal in this embodiment of the invention.

Each of beacon signals 41, 45, 46 and 47 comprises redundant signal 901, bit synchronization signal 902, frame synchronization signal 903, control signal 904 and beacon ID 905. Bit synchronization signal 902 is an 8-bit code chain consisting of repeating bits "1" and "0". Frame synchronization signal 903 is an 8-bit code chain having seven bits of PN code with additional 1 bit, and it is a signal for indicating a starting position of control signal 904. Control signal 904 includes information showing a transmission interval of beacon signal, a beacon number, and a number of relaying stages of relay wireless devices 201 that transmit beacon signals.

For example, control signal 904 includes relaying stage information of "2" in the case of wireless communication system 400 shown in Fig. 2, since the number of relaying stages of relay wireless device 201b is "2". Redundant signal 901 is a 56-bit code chain consisting of repeating bits "1" and "0" like that of the bit synchronization signal. Redundant signal 901 is inserted to provide a receiving device that receives the beacon signal with an allowance in the receiving performance such as detection of a bit synchronization signal and the like.

Description is provided next of a configuration of beacon ID 905.

Fig. 9B is a schematic illustration showing the configuration of beacon ID 905 according to this exemplary embodiment of the invention.

Beacon ID 905 is shorter in code length than a communication ID of its own station, and includes a code generated arbitrarily by the beacon signal generator at least in a portion thereof.

In one example, beacon ID 905 consists of 16 bits. These 16 bits of beacon ID comprise higher bit row 906 having 8 bits and lower bit row 907 having 8 bits. On the other hand, linking station ID 83, own local ID 84 and layer-3 ID 88 shown in Fig. 7A and Fig. 7B and used for the data communication signal have a 64-bit configuration. These ID's are required to be unique because they are used to identify the individual wireless devices.

In general, these ID's are therefore assigned, written and administered properly at the factory in a manner not to duplicate the same ID. In addition, each ID consists of a long bit chain such as 64 bits to manage with, even when a total number of production of the wireless devices becomes very large.

In the data communication signal shown in Fig. 7A and Fig. 7B, there is no significant influence on the efficiency of communications even though the ID has 64 bits, since the application data is so long as 1000 bytes, for instance. Furthermore, a frequency of data communications is about once a month, or once each day at most when used for automated gas-meter reading and the like system. The influence upon the traffic and power consumption associated with transmission and reception is therefore considered small even if the data length of ID influences the communication efficiency in case of the application data having a short length.

On the other hand, the beacon signal shown in Fig. 9A is a signal transmitted every four seconds, for instance. Therefore, if the beacon has a long signal length, it intensifies the traffic and increases the power consumed for transmission and reception of the beacon signal. It is for this reason that a method used in this embodiment does not causes a large influence upon the uniqueness of ID, even if the beacon signal is shortened in length.

Described hereinafter pertains to an example beacon ID 905 used for the beacon signal transmitted from relay wireless device 201b in wireless communication system 400, and a method of generating the same. Note that generation, verification and control of beacon ID 905 are carried out by a beacon signal generator such as control unit 17 in master wireless device 101 and control unit 26 in relay wireless device 201.

For higher bit row 906 of beacon ID 905 shown in Fig. 9B, the lowest 8 bits are taken among the 64 bits of the ID for identification of relay wireless device 201b used for the data communications. The reason here for using the lowest 8 bits is that uniqueness of the lower bits is usually higher than the higher bits among the 64 bits of the ID. It is only necessary for beacon ID 905 to include a part of the communication ID of the own device. In addition, the part to be included is just a predetermined number of the lowest digits among those of the communication ID of the device.

Relay wireless device 201b arbitrarily generates an 8-bit code chain by using a table of random numbers or the like, and uses it for lower bit row 907.

The information of this beacon ID 905 is transmitted to master wireless device 101 via relay wireless device 201a when relay wireless device 201b enters under relay wireless device 201a.

Master wireless device 101 refers to the table of its possession and checks as to whether the same beacon ID 905 has already been registered, and registers beacon ID 905 into the table if not registered. If there is an already registered beacon ID identical to beacon ID 905, master wireless device 101 transmits to relay wireless device 201b a request to change beacon ID 905.

Upon reception of the request of change of beacon ID 905 from master wireless device 101, relay wireless device 201b regenerates a code chain of lower 8 bits by using the table of random numbers or the like and take it as lower bit row 907. Relay wireless device 201b then transmits beacon ID 905 again to master wireless device 101.

The operation as discussed above can ensure uniqueness of beacon ID's 905 transmitted from all of relay wireless devices 201 that belong to master wireless device 101. Assuming another case, on the other hand, that a part of data communication ID is used for both of higher bit row 906 and lower bit row 907 that constitute beacon ID 905. When this is the case, master wireless device 101 determines that beacon ID 905 transmitted from relay wireless device 201 has already been registered, and sends a request of change of beacon ID 905. Relay wireless device 201b is unable to change beacon ID 905 even in this case, so that the uniqueness of beacon ID 905 in the system cannot be ensured. This is because beacon ID 905 is made by using the part of the data communication ID, of which a change is not possible.

In the above example, although a part of the data communication ID of relay wireless device 201b is used as higher bit row 906, a part of the data communication ID of master wireless device 101 such as a predetermined number of the lowest digits may also be used. In this case, all relay wireless devices 201 that belong to master wireless device 101 come to be assigned with a part of the data communication ID of master wireless device 101 as higher bit row 906.

An advantage of this method is that it can tell master wireless device 101 to which an originator station of beacon signal belongs by identifying higher bit row 906 in beacon ID 905.

In wireless communication system 400 shown in Fig. 2, assume a case where slave wireless device 301e having originally belonged to under relay wireless device 201a becomes unable to receive a beacon signal from relay wireless device 201a, for instance. Under such circumstance, it becomes necessary for slave wireless device 301e to change to another one of relay wireless devices 201 to which it needs to belong. It is desirable in this case to receive a beacon signal from any of relay wireless devices 201b, 201c and the like under the same master wireless device 101 as before, and come to belong to one of them. In this case, it is possible to find any of relay wireless devices 201 that belong to master wireless device 101 by identifying higher bit row 906.

In addition, it is also possible to use a plurality of beacon ID's 905 like a first beacon ID and a second beacon ID, for instance, to further ensure the uniqueness of beacon ID's 905. The first beacon ID and the second beacon ID may be made to have higher bit row 906 of identical code chain, but lower bit row 907 of arbitrarily made code chain to differentiate one from another.

The first beacon ID and the second beacon ID are used properly in their ways according to a certain rule. One example of such rule is described hereinafter.

The beacon signals are assigned with beacon numbers "1" to "255" as discussed with reference to Fig. 4. The first beacon ID is used for the beacon signal of beacon number "1" to the beacon signal of beacon number "255". The second beacon ID is then used for the subsequent beacon signal of beacon number "1" to the beacon signal of beacon number "255" following the beacon number "1" having the first beacon ID. Furthermore, the first beacon ID is used again for the next beacon signal of beacon number "1" to the next beacon signal of beacon number "255".

The first beacon ID and the second beacon ID are switched and used alternately after every cyclic period T4 of the beacon numbers.

An advantage of this method of switching and using the first beacon ID and the second beacon ID is as follows. The lower-level device receives the beacon signal of beacon number "1", and sets a clock of its own station to a clock of the higher-level device. If the first beacon ID is not unique, there is a possibility for the lower-level device to receive a beacon signal that should not be received normally (which is not unique) when it receives the first beacon ID in the timing of receiving the beacon signal of beacon number "1".

However, the normal (unique) beacon signal can be received when it makes reception of the second beacon ID at the timing of receiving the subsequent beacon signal of beacon number "1" after elapse of T4 second. In other words, there is never an error of receiving any beacon signal for other station instead of the beacon signal for the own station unless the first beacon ID and the second beacon ID are not unique and the beacon transmission timings are not the same.

Described next pertains to a method of notifying master wireless device 101 of beacon ID 905 when relay wireless device 201 enters wireless communication system 400.

Lower bit row 907 of beacon ID 905 is a code chain of random digits generated arbitrarily by relay wireless device 201, and higher bit row 906 uses digits taken from the lowest 8 bits of the data communication ID. The data communication ID of 64 bits is uniquely assigned when being shipped from the factory. The highest 8 bits of the 64 bits assigned before the shipment from the factory are substituted for lower bit row 907 of beacon ID 905, and used as a new data communication ID.

Relay wireless device 201 then transmits the new data communication ID of 64 bits as layer-3 ID 88 to master wireless device 101. As mentioned, master wireless device 101 can obtain lower bit row 907 of beacon ID 905 from the highest 8 bits of layer-3 ID 88 transmitted from the relay wireless device 201, and higher bit row 906 of beacon ID 905 from the lowest 8 bits of layer-3 ID 88.

In the case of beacon ID 905 having a first beacon ID and a second beacon ID, the highest 16 bits of the data communication ID assigned when being shipped from the factory are substituted for lower bit row 907 of the first beacon ID and lower bit row 907 of the second beacon ID, for a total of 16 bits, and used as layer-3 ID 88.

With the method as discussed, master wireless device 101 can obtain beacon ID 905 from layer-3 ID 88 transmitted to it, and improve the efficiency of communications during the new entry.

The description provided in this exemplary embodiment is based on the assumption that wireless communication system 400 includes three kinds of wireless devices comprising master wireless device 101, relay wireless devices 201 and slave wireless devices 301. However, the wireless communication system can have any type of configuration that may include master wireless device 101 and relay wireless devices 201, master wireless device 101 and slave wireless devices 301, or relay wireless device 201 and slave wireless devices 301. In view of the relationship between slave wireless devices 301 and relay wireless device 201, relay wireless device 201 is regarded as master wireless device 101 representing a higher-level device.

What has been described in this exemplary embodiment is the case where each of master wireless device 101, relay wireless devices 201 and slave wireless devices 301 that configure wireless communication system 400 is composed of hardware. It should be understood, however, that the above examples do not limit the scope of the present invention. It is also possible to achieve at least a part of the function of each individual component with description of software language and use of a computer. When this is the case, it can help ease the work of distribution, update and installation of programs by storing the programs in storage media and disseminating them through telecommunications network.

### INDUSTRIAL APPLICABILITY

According to the present invention, it becomes possible to avoid an increase in power consumption by shortening a length of transmitting beacon signals while also maintaining uniqueness of the beacon signals for their identification, as discussed above. The invention is therefore useful for a wireless communication system comprising a wireless communication device for transmitting a beacon signal and another wireless communication device for receiving the beacon signal and making time synchronization, as well as a wireless communication device and wireless communication method used for such type of wireless communication system.

### Reference Marks in the Drawings

| | |
|---|---|
| 1, 11, 21 | Antenna |
| 2, 12, 22 | Transmitter receiver |
| 3, 13 | Beacon transmitter |
| 4, 15, 24 | Link connector |
| 5 | Route information analyzer / generator |
| 6, 25 | Timing information transmitter |
| 7, 17, 26 | Control unit |
| 8, 27 | Storage unit |
| 14, 23 | Beacon receiver |
| 16 | Timing information analyzer |
| 31 | Beacon transmission slot (BT) |
| 32, 35 | Link connection slot (L) |
| 33, 36 | Data communication slot (D) |
| 34 | Beacon reception slot (BR) |
| 37 | Lower-level call slot |
| 38 | Higher-level answer / higher-level call slot |
| 41, 45, 46, 47 | Beacon signal |
| 42 | Basic slot |
| 43, 44 | Slot |
| 48, 121 | Higher-level slot |
| 51 to 56 | Repeating frame |
| 57 | Main unit frame |
| 58, 80, 902 | Bit synchronization signal |
| 59, 81, 903 | Frame synchronization signal |
| 60, 82, 904 | Control signal |
| 61 | Abbreviated ID |
| 70 | Starting position |
| 71 | Reception carrier sensing timing |
| 83 | Linking station ID |
| 84 | Local ID |
| 85 | Layer-3 frame |
| 86 | Authentication code |
| 87 | Route information |
| 88 | Layer-3 ID |
| 89 | Application data |
| 90 | Relay wireless device information |
| 91 | Slot position information |
| 101 | Master wireless device |
| 120 | Lower-level slot |
| 201a to c | Relay wireless device |
| 301a to i | Slave wireless device |
| 901 | Redundant signal |
| 905 | Beacon ID |
| 906 | Higher bit row |
| 907 | Lower bit row |

## Claims

1. A wireless communication device for communicating with at least a lower-level device, the communication device comprising:
a beacon signal generator for generating beacon signals used for synchronizing a clock of the lower-level device; and
a beacon transmitter for transmitting the beacon signals generated by the beacon signal generator to the lower-level device at regular time intervals,
wherein each of the beacon signals generated by the beacon signal generator includes a beacon identification code, the beacon identification code being shorter in code length than a communication identification code of the own device, and at least a part of the beacon identification code includes a code generated arbitrarily by the beacon signal generator.

2. The wireless communication device of claim 1, wherein the beacon identification code further includes a part of the communication identification code of the own device.

3. The wireless communication device of claim 2, wherein the beacon identification code includes a predetermined number of digits from the last end in the communication identification code of the own device.

4. The wireless communication device of claim 1, wherein the beacon identification code further includes a part of a communication identification code of a master wireless device representing a higher-level device.

5. The wireless communication device of claim 4, wherein the beacon identification code includes a predetermined number of digits from the last end in the communication identification code of the master wireless device.

6. The wireless communication device in one of claim 1 to claim 5, wherein the beacon signal generator generates a first beacon identification code and a second beacon identification code as the beacon identification code, and
the beacon transmitter transmits one of the first beacon identification code and the second beacon identification code according to a predetermined rule when transmitting the beacon signals.

7. The wireless communication device of claim 6, wherein the beacon signal generator assigns the beacon signals with different beacon numbers from one another, and
the beacon signals have the beacon numbers repeated at predetermined cyclic periods, the beacon signals transmitted during one of the predetermined cyclic periods carry the first beacon identification code, and the beacon signals transmitted during the next predetermined cyclic period carry the second beacon identification code.

8. The wireless communication device in one of claim 1 to claim 5, wherein the beacon transmitter transmits the beacon identification code to a higher-level device, and the beacon signal generator regenerates the beacon identification code upon receipt of a request of change of the beacon identification code from the higher-level device.

9. A wireless communication system comprising:
a wireless communication device set forth in one of claim 1 to claim 5; and
a master wireless device representing a higher-level device having a control unit and a transmitter receiver,
wherein the beacon transmitter of the wireless communication device transmits the beacon identification code to the master wireless device,
the control unit of the master wireless device determines whether the beacon identification code has already been registered from another wireless communication device,
the transmitter receiver of the master wireless device transmits a request of change of the beacon identification code to the wireless communication device when the control unit determines that the beacon identification code has been registered, and
the beacon signal generator of the wireless communication device regenerates the beacon identification code upon receipt of the request of change from the wireless communication device.

10. A method of wireless communications for communicating with at least a lower-level device, the method comprising:
a step of generating beacon signals used for synchronizing a clock of the lower-level device; and
a step of transmitting the beacon signals generated in the beacon signal generating step to the lower-level device at regular time intervals,
wherein each of the beacon signals generated in the beacon signal generating step includes a beacon identification code, the beacon identification code being shorter in code length than a communication identification code of own device, and at least a part of the beacon identification code includes a code generated arbitrarily by a beacon signal generator.

## Patentansprüche

1. Drahtlose Kommunikationsvorrichtung zur Kommunikation mit wenigstens einer Vorrichtung niedrigerer Ebene, wobei die Kommunikationsvorrichtung umfasst:
ein Bakensignalgenerator zum Generieren von Bakensignalen, die zum Synchronisieren eines Taktes der Vorrichtung niedrigerer Ebene verwendet werden, und
einen Bakensender zum Senden der Bakensignale, die von dem Bakensignalgenerator generiert sind, zu der Vorrichtung niedrigerer Ebene in regelmäßigen Zeitintervallen,
wobei jedes der Bakensignale, die von dem Bakensignalgenerator generiert werden, einen Bakenidentifikationscode enthält, wobei der Bakenidentifikationscode eine kürzere Codelänge hat als ein Kommunikationsidentifikationscode der eigenen Vorrichtung, und wenigstens ein Teil des Bakenidentifikationscodes einen Code enthält, der beliebig von dem Bakensignalgenerator generiert ist.

2. Drahtlose Kommunikationsvorrichtung nach Anspruch 1, wobei der Bakenidentifikationscode ferner einen Teil des Kommunikationsidentifikationscodes der eigenen Vorrichtung enthält.

3. Drahtlose Kommunikationsvorrichtung nach Anspruch 2, wobei der Bakenidentifikationscode eine vorgegebene Anzahl von Ziffern ab dem letzten Ende in dem Kommunikationsidentifikationscode der eigenen Vorrichtung enthält.

4. Drahtlose Kommunikationsvorrichtung nach Anspruch 1, wobei der Bakenidentifikationscode ferner einen Teil eines Kommunikationsidentifikationscodes einer drahtlosen Mastervorrichtung enthält, die eine Vorrichtung höherer Ebene repräsentiert.

5. Drahtlose Kommunikationsvorrichtung nach Anspruch 4, wobei der Bakenidentifikationscode eine vorgegebene Anzahl von Ziffern ab dem letzten Ende in dem Kommunikationsidentifikationscode der drahtlosen Mastervorrichtung enthält.

6. Drahtlose Kommunikationsvorrichtung nach einem der Ansprüche 1 bis 5, wobei der Bakensignalgenerator einen ersten Bakenidentifikationscode und einen zweiten Bakenidentifikationscode als den Bakenidentifikationscode generiert, und
der Bakensender den ersten Bakenidentifikationscode oder den zweiten Bakenidentifikationscode gemäß einer vorgegebenen Regel sendet, wenn er die Bakensignale sendet.

7. Drahtlose Kommunikationsvorrichtung nach Anspruch 6, wobei der Bakensignalgenerator den Bakensignalen voneinander verschiedene Bakennummern zuweist, und
die Bakensignale die Bakennummern in vorgegebenen zyklischen Perioden wiederholt aufweisen, wobei die Bakensignale, die während einer der vorgegebenen zyklischen Perioden gesendet werden, den ersten Bakenidentifikationscode tragen und die Bakensignale, die während der nächsten vorgegebenen zyklischen Periode gesendet werden, den zweiten Bakenidentifikationscode tragen.

8. Drahtlose Kommunikationsvorrichtung nach einem der Ansprüche 1 bis 5, wobei der Bakensender den Bakenidentifikationscode zu einer Vorrichtung höherer Ebene sendet und der Bakensignalgenerator den Bakenidentifikationscode nach dem Empfang einer Anforderung zum Ändern des Bakenidentifikationscodes von einer Vorrichtung höherer Ebene erneut generiert.

9. Drahtloses Kommunikationssystem, das umfasst:
eine drahtlose Kommunikationsvorrichtung nach einem der Ansprüche 1 bis 5; und
eine drahtlose Mastervorrichtung, die eine Vorrichtung höherer Ebene repräsentiert, die eine Steuereinheit und einen Sender/Empfänger aufweist,
wobei der Bakensender der drahtlosen Kommunikationsvorrichtung den Bakenidentifikationscode zu der drahtlosen Mastervorrichtung sendet,
die Steuereinheit der drahtlosen Mastervorrichtung bestimmt, ob der Bakenidentifikationscode bereits von einer anderen drahtlosen Kommunikationsvorrichtung eingetragen wurde,
der Sender/Empfänger der drahtlosen Mastervorrichtung eine Anforderung zum Ändern des Bakenidentifikationscodes zu der drahtlosen Kommunikationsvorrichtung sendet, wenn die Steuereinheit bestimmt, dass der Bakenidentifikationscode eingetragen wurde, und
der Bakensignalgenerator der drahtlosen Kommunikationsvorrichtung den Bakenidentifikationscode nach dem Empfang der Anforderung zum Ändern von der drahtlosen Kommunikationsvorrichtung erneut generiert.

10. Verfahren der drahtlosen Kommunikation zum Kommunizieren mit wenigstens einer Vorrichtung niedrigerer Ebene, wobei das Verfahren umfasst:
einen Schritt des Generierens von Bakensignalen, die zum Synchronisieren eines Takts der Vorrichtung niedrigerer Ebene verwendet werden; und
einen Schritt des Sendens der Bakensignale, die in dem Schritt des Generierens der Bakensignale generiert wurden, zu der Vorrichtung niedrigerer Ebene in regelmäßigen Zeitintervallen,
wobei jedes der Bakensignale, die in dem Schritt des Generierens der Bakensignale generiert werden, einen Bakenidentifikationscode enthält, wobei der Bakenidentifikationscode eine kürzere Codelänge hat als ein Kommunikationsidentifikationscode der eigenen Vorrichtung und wenigstens ein Teil des Bakenidentifikationscodes einen Code enthält, der beliebig von einem Bakensignalgenerator generiert ist.

## Revendications

1. Dispositif de communication sans fil pour communiquer avec au moins un dispositif de niveau inférieur, le dispositif de communication comprenant :
un générateur de signaux de balise pour générer des signaux de balise utilisés pour synchroniser une horloge du dispositif de niveau inférieur ; et
une balise radioélectrique pour transmettre les signaux de balise générés par le générateur de signaux de balise au dispositif de niveau inférieur à des intervalles de temps réguliers,
dans lequel chacun des signaux de balise générés par le générateur de signaux de balise inclut un code d'identification de balise, le code d'identification de balise ayant une longueur de code plus courte qu'un code d'identification de communication du dispositif utilisateur, et au moins une partie du code d'identification de balise inclut un code généré de manière arbitraire par le générateur de signaux de balise.

2. Dispositif de communication sans fil selon la revendication 1, dans lequel le code d'identification de balise inclut en outre une partie du code d'identification de communication du dispositif utilisateur.

3. Dispositif de communication sans fil selon la revendication 2, dans lequel le code d'identification de balise inclut un nombre prédéterminé de chiffres depuis la dernière extrémité dans le code d'identification de communication du dispositif utilisateur.

4. Dispositif de communication sans fil selon la revendication 1, dans lequel le code d'identification de balise inclut en outre une partie du code d'identification de communication d'un dispositif sans fil maître représentant un dispositif de niveau supérieur.

5. Dispositif de communication sans fil selon la revendication 4, dans lequel le code d'identification de balise inclut un nombre prédéterminé de chiffres depuis la dernière extrémité dans le code d'identification de communication du dispositif sans fil maître.

6. Dispositif de communication sans fil selon l'une des revendications 1 à 5, dans lequel le générateur de signaux de balise génère un premier code d'identification de balise et un deuxième code d'identification de balise comme code d'identification de balise, et
la balise radioélectrique transmet l'un des premier code d'identification de balise et deuxième code d'identification de balise en fonction d'une règle prédéterminée lors de la transmission des signaux de balise.

7. Dispositif de communication sans fil selon la revendication 6, dans lequel le générateur de signaux de balise attribue aux signaux de balise des numéros de balise différents les uns des autres, et
les numéros de balise des signaux de balise se répètent à des périodes cycliques prédéterminées, les signaux de balise transmis durant l'une des périodes cycliques prédéterminées transportent le premier code d'identification de balise, et les signaux de balise transmis durant la période cyclique prédéterminée suivante transportent le deuxième code d'identification de balise.

8. Dispositif de communication sans fil selon l'une des revendications 1 à 5, dans lequel la balise radioélectrique transmet le code d'identification de balise à un dispositif de niveau supérieur, et le générateur de signaux de balise régénère le code d'identification de balise lors de la réception d'une demande de modification du code d'identification de balise provenant du dispositif de niveau supérieur.

9. Système de communication sans fil comprenant :
un dispositif de communication sans fil selon l'une des revendications 1 à 5 ; et
un dispositif sans fil maître représentant un dispositif de niveau supérieur ayant une unité de commande et un émetteur-récepteur,
dans lequel la balise radioélectrique du dispositif de communication sans fil transmet le code d'identification de balise au dispositif sans fil maître,
l'unité de commande du dispositif sans fil maître détermine si le code d'identification de balise a ou non déjà été enregistré par un autre dispositif de communication sans fil,
l'émetteur-récepteur du dispositif sans fil maître transmet une demande de modification du code d'identification de balise au dispositif de communication sans fil lorsque l'unité de commande détermine que le code d'identification de balise a déjà été enregistré, et
le générateur de signaux de balise du dispositif de communication sans fil régénère le code d'identification de balise lors de la réception de la demande de modification provenant du dispositif de communication sans fil.

10. Procédé de communication sans fil pour communiquer avec au moins un dispositif de niveau inférieur, le procédé comprenant :
une étape consistant à générer des signaux de balise utilisés pour synchroniser une horloge du dispositif de niveau inférieur ; et
une étape consistant à transmettre les signaux de balise générés à l'étape de génération de signaux de balise au dispositif de niveau inférieur à des intervalles de temps réguliers,
dans lequel chacun des signaux de balise générés à l'étape de génération de signaux de balise inclut un code d'identification de balise, le code d'identification de balise ayant une longueur de code plus courte qu'un code d'identification de communication du dispositif utilisateur, et au moins une partie du code d'identification de balise inclut un code généré de manière arbitraire par un générateur de signaux de balise.
